# EUROPEAN PATENT APPLICATION

(11) **EP 4 220 494 A1**
(43) Date of publication of application: **02.08.2023**
(21) Application number: 23153641.8
(22) Date of filing: 27.01.2023
(51) Int. Cl.: G06N 3/098, G08G 1/01, H04W 4/02, H04W 4/20, H04W 4/40

(54) **INFORMATION PROCESSING APPARATUS, INFORMATION PROCESSING METHOD, AND NON-TRANSITORY STORAGE MEDIUM**

(30) Priority: 27.01.2022 JP 2022011039
(71) Applicant: TOYOTA JIDOSHA KABUSHIKI KAISHA, Aichi-Ken 471-8571 (JP)
(72) Inventor: ZHONG, Lei, TOYOTA-SHI, AICHI-KEN, 471-8571 (JP); MA, Jing, TOYOTA-SHI, AICHI-KEN, 471-8571 (JP); SHAO, Xiao, TOYOTA-SHI, AICHI-KEN, 471-8571 (JP)
(74) Representative: Cabinet Beau de Loménie

(57) **Abstract**

An information processing apparatus (3) includes a controller configured to: acquire mobile body information including information that indicates the respective positions of a plurality of mobile bodies (10) that are usable for machine learning; and select two or more mobile bodies (10) to be used for machine learning based on the mobile body information.

## Description

### BACKGROUND

### 1. Technical Field

The present disclosure relates to an information processing apparatus, an information processing method, and a non-transitory storage medium.

### 2. Description of the Related Art

There are systems in which distributed machine learning is performed using a heterogeneous computing nodes in a heterogeneous computing environment (e.g. U.S. Patent Application Publication No. 2019/0138934).

### SUMMARY

An object of the present disclosure is to provide a technique that enables suitably selecting mobile bodies for machine learning.

An aspect of the present disclosure provides an information processing apparatus comprising a controller configured to: acquire mobile body information including information that indicates respective positions of a plurality of mobile bodies that are usable for machine learning; and select one or more mobile bodies to be used for machine learning based on the mobile body information.

Another aspect of the present disclosure provides an information processing method that causes an information processing apparatus to execute: acquiring mobile body information including information that indicates respective positions of a plurality of mobile bodies that are usable for machine learning; and selecting one or more mobile bodies to be used for machine learning based on the mobile body information.

Another aspect of the present disclosure provides a program that causes a computer to execute: acquiring mobile body information including information that indicates respective positions of a plurality of mobile bodies that are usable for machine learning; and selecting one or more mobile bodies to be used for machine learning based on the mobile body information.

Other aspects of the present disclosure may include an information processing system that comprises the information processing apparatus discussed above, a non-transitory storage medium that stores the program discussed above, etc.

With the present disclosure, it is possible to suitably select mobile bodies to be used for machine learning.

### BRIEF DESCRIPTION OF THE DRAWINGS

FIG. 1 illustrates a first configuration example of an information processing system;
FIG. 2A illustrates an example of the configuration of a node mounted on a mobile body (vehicle), and FIG. 2B illustrates an example of the configuration of a server;
FIG. 3 illustrates node-related information;
FIG. 4 is a flowchart illustrating an example of a node selection process;
FIG. 5 illustrates a second configuration example of an information processing system;
FIG. 6 is a flowchart illustrating an example of a node selection process according to the second configuration example;
FIG. 7 illustrates a third configuration example of an information processing system;
FIG. 8 illustrates a 5G network;
FIG. 9 is a sequence diagram illustrating acquisition of vehicle information;
FIG. 10 is a sequence diagram illustrating a specific example of acquisition of vehicle information;
FIG. 11 is a table illustrating UE mobility statistics information;
FIG. 12 illustrates generation of moving direction information; and
FIG. 13 is a flowchart illustrating a process related to generation of moving direction information.

### DESCRIPTION OF THE EMBODIMENTS

An embodiment of the present disclosure will be described below with reference to the drawings. In all drawings for the following embodiment, like or corresponding portions are given like numerals. The present disclosure is not limited to the embodiment described below. Constituent elements of the following embodiment include those that are easily replaceable by a person skilled in the art, and those that are substantially identical.

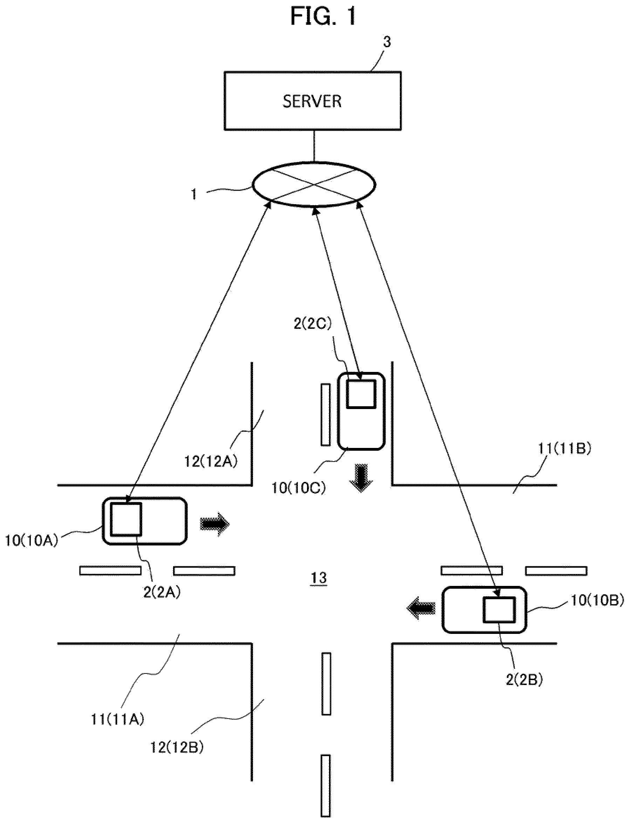

FIG. 1 illustrates a first configuration example of an information processing system. In FIG. 1, the information processing system includes a network 1, a plurality of nodes (terminals) 2, and a server 3 that can communicate with the nodes 2 through the network 1 and that performs machine learning using the nodes 2.

The network 1 is a public communication network such as the Internet, for example, and provides a communication line to the nodes 2. A wireless communication network may be connected to the network 1. The wireless communication network conforms or adheres to a wireless communication standard that can be used by the nodes 2. Examples of the wireless communication network include, but are not limited to, 4G (LTE (Long Term Evolution)), 5G, wireless LAN (Local Area Network, including Wi-Fi), and BLE.

The nodes 2 are mounted on respective vehicles 10, which are examples of mobile bodies. The mobile bodies are not limited to vehicles. FIG. 1 illustrates vehicles 10A, 10B, and 10C as examples of the vehicles 10, and illustrates a node 2A mounted on the vehicle 10A, a node 2B mounted on the vehicle 10B, and a node 2C mounted on the vehicle 10C as examples of the nodes 2.

In FIG. 1, the vehicles 10 travel on roads 11 and 12, and the road 11 and the road 12 intersect each other at an intersection 13. Each of the roads 11 and 12 has two lanes. The vehicle 10A is traveling on the road 11 (11A and 11B) from the left side toward the right side on the sheet surface of FIG. 1. The vehicle 10B is traveling on the road 11 from the right side toward the left side on the sheet surface of FIG. 1. The vehicle 10C is traveling on the road 12 (12A and 12B) from the upper side toward the lower side on the sheet surface of FIG. 1.

The server 3 operates as an FL (federated learning) center server that performs FL as an example of machine learning. Variations in scenes from the roads 11 and 12 near the intersection 13, e.g. structures such as surrounding signs and buildings, the flow of people, etc. are learned through federated learning. In order to perform such learning, the nodes 2 on the vehicles 10 traveling on the road 11 or 12 are supplied with a training model (such as a neural network). The node 2 learns a difference (variations in scenes) through machine learning performed using vehicle window scenery data captured by an in-vehicle camera, and transmits the results of learning (portion corresponding to the variations in scenes) and an update of the training model (such as updated parameters of the neural network) to the server 3. The server 3 integrates or otherwise handles the results of learning received from two or more nodes 2, and records variations in the situation around the roads 11 and 12 near the intersection 13. The server 3 also prepares a new training model using the results of learning.

In the federated learning described above, machine learning is preferably performed using the vehicle 10 traveling on the road 11 and the vehicle 10 traveling on the road 12, rather than using two or more vehicles 10 traveling on the road 11. This is because the results of machine learning can be obtained for different pieces of information (scenes) when the vehicles are traveling on different roads.

When there are two or more vehicles 10 (nodes 2) traveling in the same direction on the road 11 or the road 12, scenery from a vehicle window captured by the two or more vehicles 10 is not different (is significantly similar) among the vehicles. Therefore, similar redundant information is obtained as a result of machine learning performed using two or more such vehicles 10. Therefore, in order to perform efficient federated learning while avoiding redundant machine learning, the server 3 selects one or more nodes 2 traveling (moving) in different directions as nodes 2, and performs federated learning using such nodes 2, to perform efficient (suitable) federated learning.

While the information processing system performs federated learning as an example of machine learning in the embodiment, the information processing system may perform machine learning with the server 3 acquiring captured data (samples) for learning from two or more vehicles 10, aggregating the acquired data, and performing machine learning using the aggregated data.

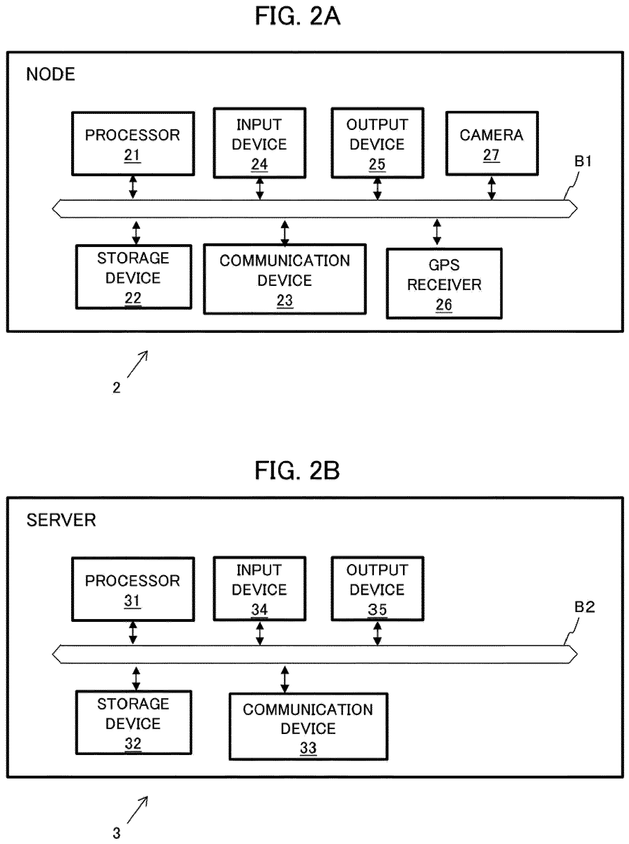

FIG. 2A illustrates an example of the configuration of the node 2. The node 2 may be a terminal fixed to the vehicle 10, or may be a portable terminal carried by a driver of the vehicle 10. Examples of the portable terminal include a personal computer (PC), a smartphone, and a tablet terminal.

In FIGS. 2A and 2B, the node 2 includes a processor 21 that serves as a processing unit or a control unit (controller), a storage device 22, a communication device 23, an input device 24, an output device 25, a global positioning system (GPS) receiver 26, and a camera 27, which are connected to each other via a bus B1.

The storage device 22 includes a main storage device and an auxiliary storage device. The main storage device is used as an area for storing programs and data, an area for developing a program, a work area for a program, an area for buffering communication data, etc. The main storage device is constituted of a random access memory (RAM) or a combination of a RAM and a read only memory (ROM). The auxiliary storage device is used as an area for storing data and programs. A non-volatile storage medium such as a hard disk, a solid state drive (SSD), a flash memory, and an electrically erasable programmable read-only memory (EEPROM) can be used as the auxiliary storage device, for example.

The communication device 23 is a circuit that performs a communication process, and operates as a transmission unit and a reception unit (communication unit). The communication device 23 may be a wireless communication circuit that performs wireless communication (such as LTE, 5G, wireless LAN (Wi-Fi), and BLE), for example.

The input device 24 includes a key, a button, a pointing device, a touch screen, etc., and is used to input information. The input device 24 may include a microphone (sound input device). The output device 25 may be a liquid crystal display, an organic EL display, etc., for example, and displays information and data. The output device 25 may include a speaker (sound output device).

The GPS receiver 26 receives radio waves from GPS satellites, calculates the position of the node 2 (vehicle 10), and generates position information. The camera 27 can capture scenes, etc., seen from a vehicle window. The camera 27 can be omitted if the vehicle 10 includes a camera. The same also applies to the GPS receiver 26. A LiDAR (Light Detection And Ranging) device, a RADAR (Radio Detection And Ranging) device, or other sensors may be used in place of the camera 27 or an in-vehicle camera.

The processor 21 may be a central processing unit (CPU), for example. The processor 21 performs various processes by executing various programs stored in the storage device 22.

For example, the processor 21 performs a process of accessing the server 3 and transmitting node information to the server 3. The node information includes information that indicates the calculation resource amount of the node 2, information that indicates the memory capacity, position information on the node 2 (vehicle 10), etc. In addition, the processor 21 receives a training model for local machine learning from the server 3. The processor 21 performs machine learning using the training model and image data on the scenes captured by the camera 27, etc., and transmits the machine learning results to the server 3.

FIG. 2B illustrates an example of the configuration of the server 3. The server 3 can be constituted using a general-purpose information processing apparatus (computer) such as a PC or a work station (WS) or a dedicated information processing apparatus such as a server machine. The server 3 has a communication function, and can be connected to the network 1 through a wire or wirelessly. The server 3 may be a single information processing apparatus, or may be a collection (cloud) of two or more information processing apparatuses.

The server 3 includes a processor 31 that serves as a processing unit or a control unit (controller), a storage device 32, a communication device 33, an input device 34, and an output device 35, which are connected to each other via a bus B2. The processor 31, the storage device 32, the communication device 33, the input device 34, and the output device 35 may be the same as the processor 21, the storage device 22, the communication device 23, the input device 24, and the output device 25, respectively. The components may have different performances in accordance with the required processing load etc. The communication device 33 may be a device that can be connected to the network 1 through a wire, such as a network interface card (NIC).

A plurality of CPUs may be used, or a multi-core CPU may be used, as the processors 21 and 31 discussed above. At least a part of the process performed by the CPU may be performed by a processor other than the CPU such as a digital signal processor (DSP) or a graphical processing unit (GPU). At least a part of the process performed by the CPU may be performed by a dedicated or general-purpose integrated circuit (hardware). The integrated circuit may include an ASIC (Application Specific Integrated Circuit), a FPGA (Field Programmable Gate Array), etc. Alternatively, at least a part of the process performed by the CPU may be executed by a combination of a processor and an integrated circuit. The combination may be called microcontroller (MCU), SoC (system-on-a-chip), system LSI, chip set, etc., for example.

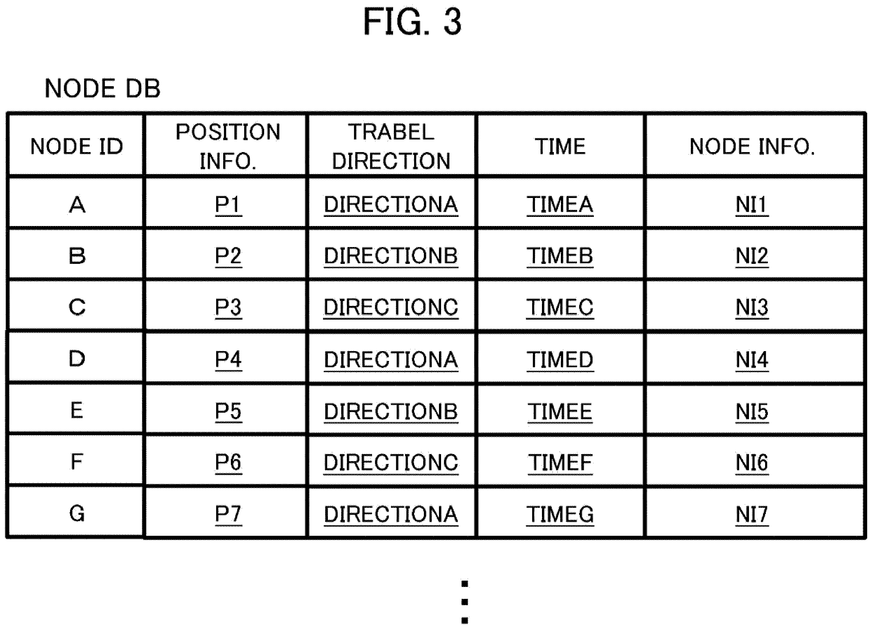

FIG. 3 illustrates node-related information. FIG. 3 illustrates a node DB that stores node-related information. The node DB is stored in the storage device 32 of the server 3, for example. The node DB includes records (entries) for the nodes 2. The entries include a node ID, position information, travel direction information, time information, and node information as information elements (items). The node-related information is an example of "mobile body information". Herein, the nodes 2 mounted on the vehicles can be considered as the vehicles 10. Therefore, the node-related information is occasionally referred to as "vehicle information" in the following description.

The node ID is an identifier of the node 2. The position information is information that indicates the position of the node 2 (vehicle 10). The travel direction information is information that indicates the travel direction (moving direction) of the node 2. The time information indicates the time when the server 3 has received the position information and the travel direction information, for example. However, a time other than the time of reception may be used as long as the criterion of the time is common among the entries. The node information is information that indicates the performance of the node 2 such as the calculation resource amount and the memory capacity of the node 2, or the load status. The node-related information may also include information that ties the vehicle 10 and the node 2 to each other, such as an ID (vehicle ID) of the vehicle 10 on which the node 2 is mounted.

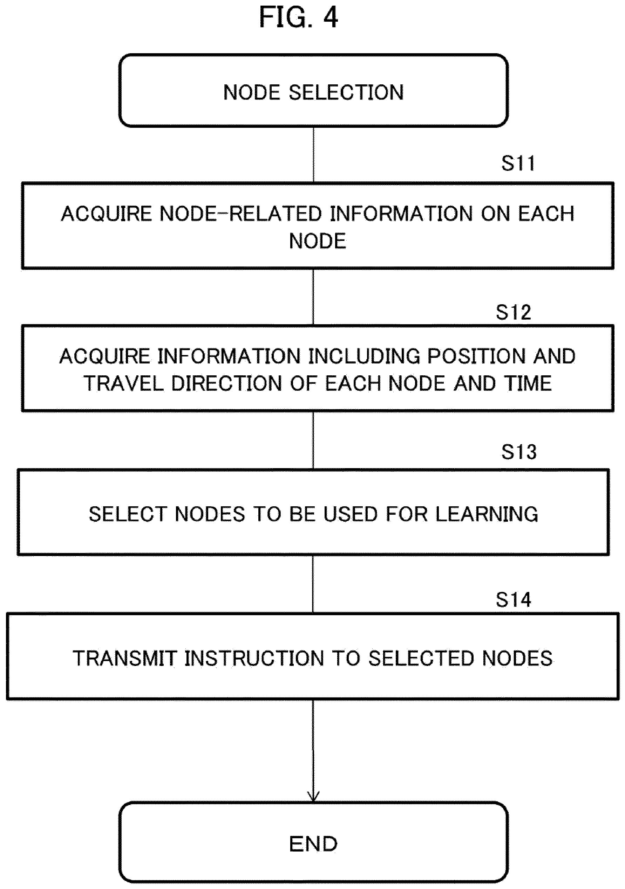

FIG. 4 is a flowchart illustrating an example of a node selection process. The process is performed when the processor 31 of the server 3 executes a program. In step S11, the processor 31 acquires node-related information from a plurality of nodes 2, and registers (updates) the acquired information in the node DB. The information can be selectively acquired through communication between the server 3 and the node 2 or communication between the server 3 and a component other than the node 2, manually input using the input device 34 of the server 3, read from a storage medium such as a USB memory, etc.

In step S12, the processor 31 acquires information that indicates the position and the travel direction of each node 2 and the time from the node DB. In step S13, the processor 31 selects nodes 2 to be used for learning based on the information (vehicle information) acquired in step S12.

A case where it is desired to capture an image of scenery from a vehicle window during movement on the road 11 (11A and 11B) is assumed using the example illustrated in FIG. 3, for example. In this case, nodes 2, for which the position information registered in the node DB indicates the positions of the road 11A and the intersection 13, are extracted. Next, the travel direction of the extracted nodes 2 is focused on. When there are two or more nodes traveling in the same direction at this time, all the nodes but at least one are excluded from the nodes to be selected. This is because it is highly likely that images of scenery captured from a vehicle window are significantly similar (redundant) when capturing conditions are the same among the vehicles. As a result, nodes positioned on the road 11 and traveling in different directions are selected as nodes for federated learning. In the example in FIG. 1, the node 2A is selected as a node for federated learning.

A node 2 positioned at the intersection 13 may or may not be selected as a node for federated learning. When federated learning is performed for the road 11B, nodes 2 for federated learning are selected from nodes 2 positioned on the road 11B and the intersection 13 in the same method as that described for the road 11A. In the example in FIG. 1, the node 2B is selected.

Nodes 2 are selected also for each of the road 12A and the road 12B in the same manner as for the roads 11A and 11B. Consequently, the node 2C is selected in the example in FIG. 1.

In step S13, nodes 2 may be extracted in consideration of the present time. For example, the processor 31 may extract records, the time information on which belongs to a time or a time slot that meets an extraction condition determined from the present time (e.g. the difference from the present time is less than a threshold), from the node DB (nodes with records, the time information on which does not meet the extraction condition, are excluded from the nodes to be selected). For some roads, the flow of people in structures or on sidewalks that face the road may be different between the night and the day. It is possible to prevent learning from being performed using image data captured at a significantly different time from the training model by narrowing nodes in consideration of the present time.

In step S14, the processor 31 transmits an instruction for machine learning (including an instruction to capture an image of scenery from a vehicle window), including a training model for machine learning, to the nodes selected in step S13.

In the first configuration example, acquisition of redundant data is avoided by selecting the nodes 2 using the position information on each node 2. The nodes 2 can be selected further efficiently by selecting the nodes 2 based on the position information and the travel direction information. The nodes to be selected can be suitably narrowed by selecting the nodes 2 based on the present time (time information), in addition to the position information or the position information and the travel direction information. Use of the travel direction information and use of the time information are each optional.

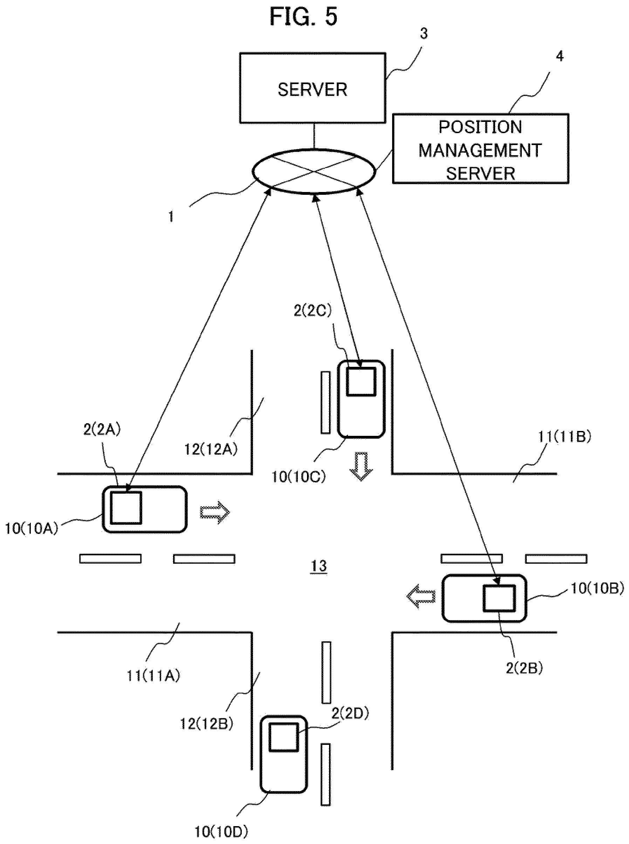

FIG. 5 illustrates a second configuration example of an information processing system. The second configuration example is different from the first configuration example in the following respects. That is, in the second configuration example, a position management server 4 called third party is connected to the network 1. The position management server 4 is configured similarly to the server 3 illustrated in FIG. 2B, and receives position information on each node 2 (vehicle 10) transmitted at an appropriate timing from the node 2.

The position management server 4 transmits position information on each node 2 to the server 3 via the network 1 at an appropriate timing. Travel direction information on each node 2 is registered in the node DB (FIG. 3) in the same manner as in the first configuration example. The travel direction information may be registered in the position management server 4, and transmitted (sent) to the server 3 together with the position information.

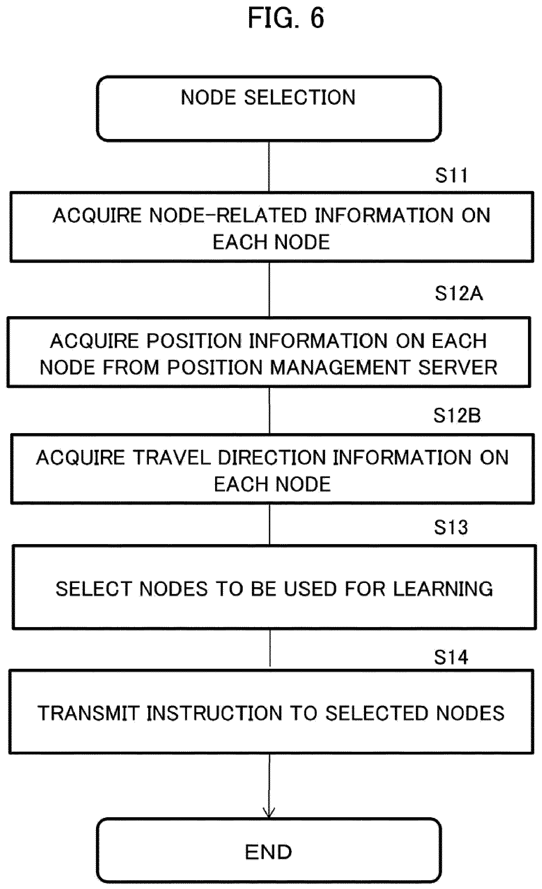

FIG. 6 is a flowchart illustrating an example of a node selection process according to the second configuration example. The processes in steps S11, S13, and S14 in FIG. 6 are the same as the processes according to the first configuration example (FIG. 4), and therefore are not described repeatedly. In FIG. 6, steps S12A and S12B are provided in place of step S12.

In step S12A, the processor 31 acquires position information on each node 2 from the position management server 4. In step S12B, the processor 31 acquires travel direction information on each node 2 from the node DB.

The routine illustrated in FIG. 4 can be applied in the second configuration example as a routine for selecting nodes 2, by acquiring position information from the position management server 4 using a routine that is different from the routine illustrated in FIG. 6 so that position information is acquired from the position management server 4 and registered in the node DB at an appropriate timing.

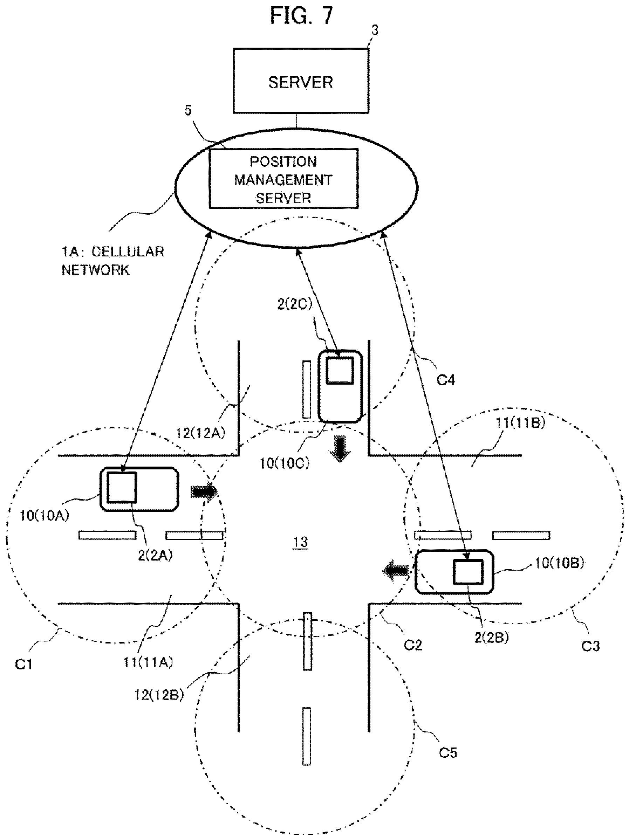

FIG. 7 illustrates a third configuration example of an information processing system. In the third configuration example, the network 1 is a cellular network 1A, and a position management server 5 is provided in the cellular network 1A. While the cellular network 1A is a 5G network in the present embodiment, the cellular network 1A may be a 4G (LTE) network.

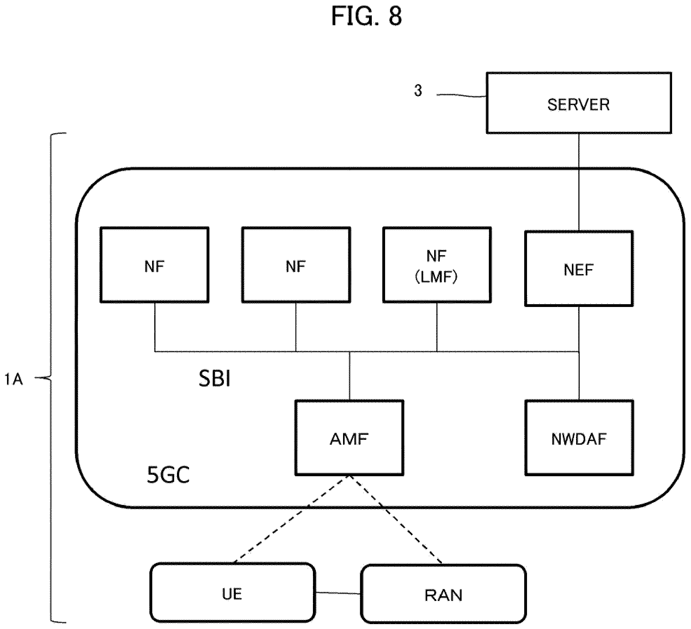

FIG. 8 illustrates a 5G network which is an example of the cellular network. The 5G network includes a RAN (radio access network), which includes a wireless base station that accommodates wireless terminals (UE: user equipment), and a core network (5GC).

The node 2 corresponds to the UE in the 5G network. The UE is connected to the 5GC via the RAN. The 5GC is constituted of functional units called NFs (network functions). In the example illustrated in FIG. 8, the 5GC is composed of an AMF (Access and Mobility Management Function), an NEF (Network Exposure Function), an NWDAF (NetWork Data Analytic Function), and one or two or more NFs. The AMF, the NEF, the NWDAF, and the NFs are connected to each other through an SBI (Service Based IF).

The AMF is a UE residence accommodation device in the 5GC, and manages mobility of the UE (manages a cell in which the UE resides). The NWDAF has a function of collecting and analyzing data from the NEF and the NFs. The NEF is an NF that provides an API (Application Programming Interface) for handling acquisition of information in the 5GC by an application, etc., outside the 5GC or control in the 5GC. The API indicates the specifications of an interface that is used for mutual exchange among devices in the 5GC. One of the NFs can function as an LMF (Location Management Function). The LMF is an NF that provides a position information service prescribed in the 5GC.

The position management server 5 acquires position information and travel direction information on each node 2 from the node 2, and supplies (transmits) the position information and the travel direction information to the server 3 in response to a request from the server 3 (an external application mounted on the server 3). The position management server 5 can be implemented as a function of the NWDAF, the AMF, or the LMF which constitutes the 5GC. In other words, the position management server 5 can be built in the 5GC by installing a program that operates as the position management server 5 in an information processing apparatus (computer) that operates as the NWDAF, the AMF, or the LMF. The position management server 5 may be a single NF that is independent of the NWDAF, the AMF, and the LMF. The method by which the position management server 5 obtains position information and travel direction information is not limited.

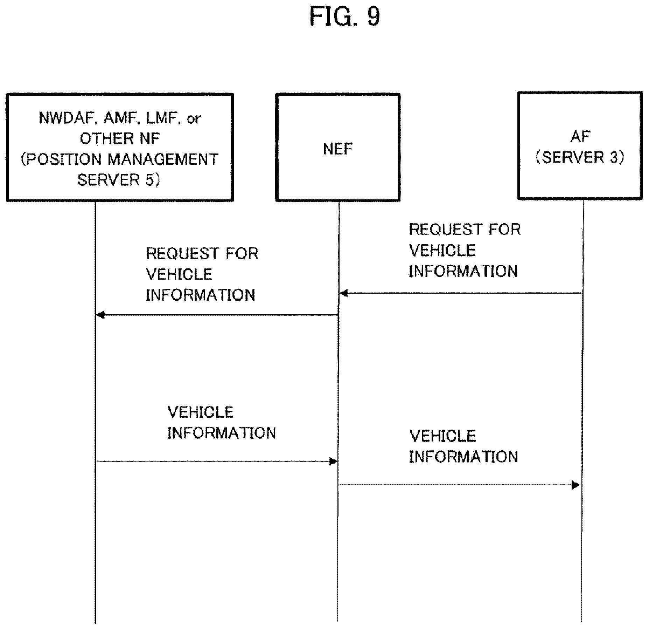

FIG. 9 is a sequence diagram illustrating acquisition of vehicle information (node-related information). An AF (Application Function) as the server 3 transmits a request (vehicle information request) for vehicle information including position information and travel direction information on the vehicle 10 (node 2) to the position management server 5 (NWDAF, AMF, LMF, or other NFs) in the 5GC. The vehicle information request is converted into a 5GC signal format via the NEF, and received by (provided to) the position management server 5.

The position management server 5 holds (stores) vehicle information including position information and travel direction information on each node 2 acquired by a predetermined method, and transmits the vehicle information to the AF (server 3) at an appropriate timing. The vehicle information is changed in signal format in the NEF, and thereafter received by the AF. In this manner, the server 3 can receive (acquire) position and travel direction information on the plurality of nodes 2 at a desired timing from the position management server 5 in the 5GC.

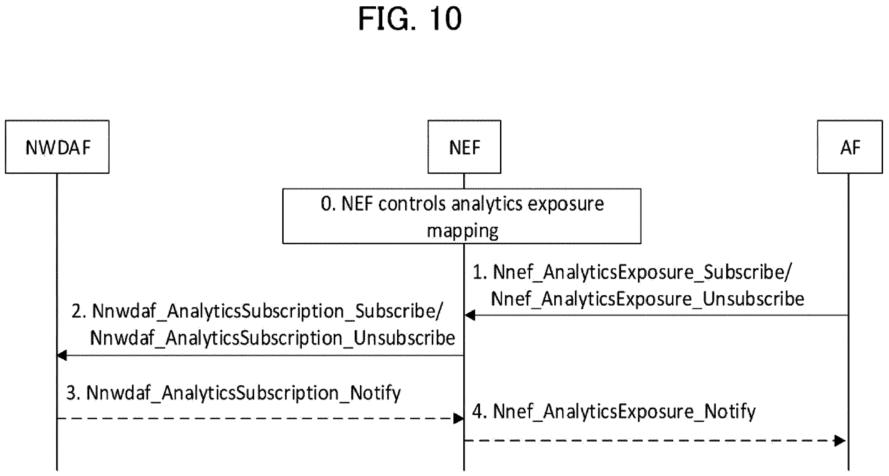

FIG. 10 is a sequence diagram illustrating a specific example of acquisition of vehicle information. The sequence illustrated in FIG. 10 is defined in TS 23.288 as "Procedure for analytics subscribe/unsubscribe by AFs via NEF".

The vehicle information request illustrated in FIG. 9 can be implemented in a message (called request message) called
"Nnef_AnalyticsExposure_Subscribe/Nnef_AnalyticsExposure_Unsu bscribe" transmitted from the AF corresponding to the server 3. The request message is converted in signal format in the NEF into a message called
"Nnef_AnalyticsSubscription_Subscribe/Nnef_AnalyticsSubscript ion_Unsubscribe", and thereafter received by the NWDAF which operates as the position management server 5, for example.

The request message can include at least information elements called Analytics ID(s), Notification Target Address, and Analytics target period. The Analytics ID(s) is the ID (identifier) of a node 2 that desires a notification including vehicle information. The Notification Target Address indicates the address of the AF as a target to be notified. The Analytics target period indicates the timing of notification (e.g. once only, or regularly or periodically, etc.).

The NWDAF receives the request message, and acquires position and travel direction information on one or more nodes 2 specified by the Analytics ID(s). The position and travel direction information may be information registered in a storage area used by the NWDAF, or may be position and travel direction information transmitted by the AMF or the LMF to the NWDAF in response to a request transmitted to the AMF or the LMF.

The position and travel direction information (vehicle information corresponding to the request) is transmitted from the NWDAF on a message (called notification message) called "Nnwdaf_AnalyticsSubscription_Notify" at a timing designated by the request message. The notification message is converted in signal format in the NEF into a message called "Nnwdaf_AnalyticsExposure_Notify", and transmitted to the AF. In this manner, the AF can acquire position and travel direction information from the NWDAF.
The message used for exchange may be an existing message, a message obtained by altering an existing message, or a newly prepared message.

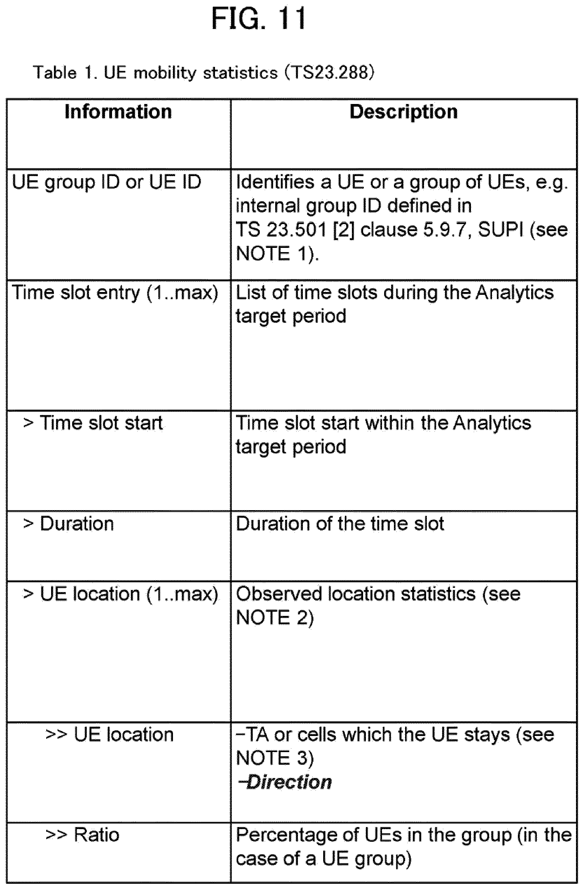

FIG. 11 is a table illustrating UE mobility statistics information defined in TS 23.288. As illustrated in the table in FIG. 11, the UE mobility statistics information prescribes that information that indicates a cell or a TA (tracking area) in which UE (node 2) stays (resides) as "UE location" information. The information on the cell or the TA corresponds to the position information on the node 2. In the present embodiment, travel direction information on the node 2 is further included in the UE mobility information.

The method of acquiring or generating travel direction information (also referred to as moving direction information) is not limited. The method of generating travel direction information is described with reference to FIGS. 7, 12, and 13. A case where cells C1 to C5 are formed on the roads 11 and 12 and the intersection 13 by base stations that form a RAN in the 5G network as illustrated in FIG. 7 is assumed. The coverage of the cell C1 includes the road 11A. The coverage of the cell C2 includes the intersection 13. The coverage of the cell C3 includes the road 11B. The coverage of the cell C4 includes the road 12A. The coverage of the cell C5 includes the road 12B.

When the relationship of the cells C1 to C5 with the roads 11 and 12 and the intersection 13 is seen, it can be understood that the travel direction (road 11A → intersection 13 → road 11B) of movement on the road 11 from the left side toward the right side on the sheet surface of FIG. 7 corresponds to the arrangement (order) of cell C1 → cell C2 → cell C3. Conversely, it can be understood that the travel direction (road 11B , intersection 13 → road 11A) of movement on the road 11 from the right side toward the left side on the sheet surface of FIG. 7 corresponds to the arrangement (order) of cell C3 → cell C2 → cell C1.

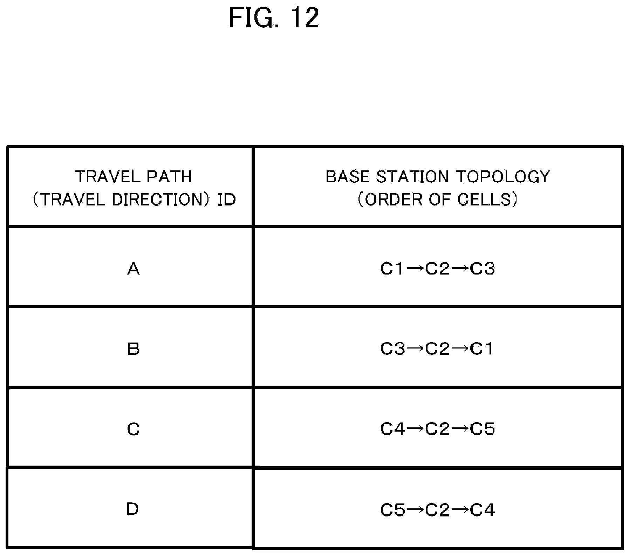

Meanwhile, it can be understood that the travel direction (road 12A → intersection 13 → road 12B) of movement on the road 12 from the upper side toward the lower side on the sheet surface of FIG. 7 corresponds to the arrangement (order) of cell C4 → cell C2 → cell C5. Conversely, it can be understood that the travel direction (road 12B , intersection 13 → road 12A) of movement on the road 12 from the lower side toward the upper side on the sheet surface of FIG. 7 corresponds to the arrangement (order) of cell C5 → cell C2 → cell C4. Such correlation between the travel direction (travel path) and the order of the cells (base station topology) can be expressed in a correlation table as illustrated in FIG. 12.

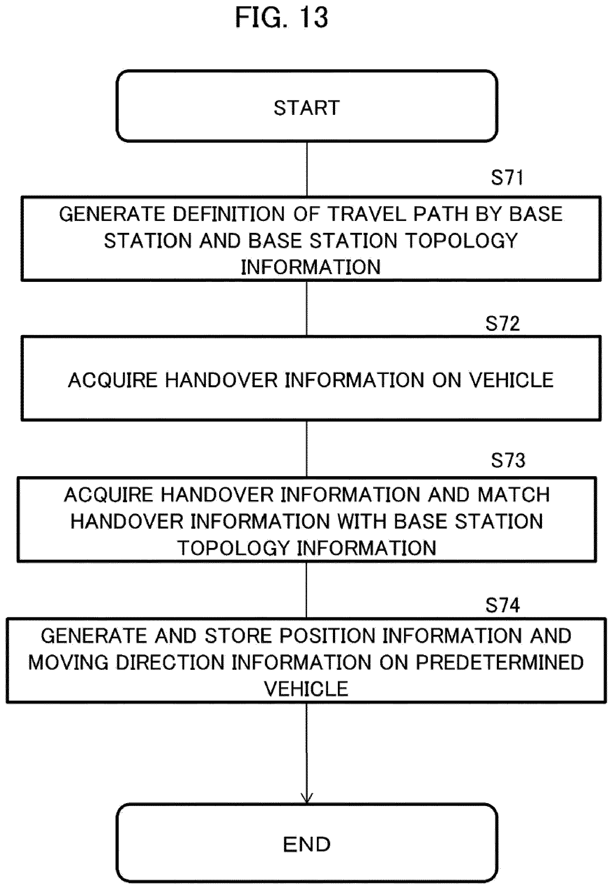

A computer that operates as the position management server 5 can be configured in the same manner as the server 3 (FIG. 2B), by way of example. The storage device 32 stores a table that illustrates the correlation between the travel path ID and the base station topology such as that illustrated in FIG. 12. The processor 31 of the computer that operates as the position management server 5 can figure out the travel direction of each node 2 by performing a process such as that illustrated in the flowchart in FIG. 13.

FIG. 13 is a flowchart illustrating a method of determining travel of a vehicle (mobile body). In step S71 in FIG. 13, the position management server 5 generates base station topology information (FIG. 12) including the definition of a travel path specified by the travel path ID.

In step S72, the position management server 5 acquires handover information on the vehicle 10 (node 2) from the AMF etc. The handover information is information that indicates a history of handover of the node 2 (the order of cells in which the node 2 has resided) that accompanies movement of the vehicle 10.

In step S73, the position management server 5 matches the handover information and the base station topology information with each other. That is, the position management server 5 makes a comparison between the handover information on the node 2 residing at a certain position and the base station topology information illustrated in the table in FIG. 12. When there is base station topology information that matches the handover information at this time, it is determined that a travel direction specified by a travel path ID corresponding to the base station topology information is the travel direction of the node 2. In step S74, the position management server 5 stores (saves) travel direction information (moving direction information) that indicates the travel direction as travel direction information to be sent to the AF (server 3).

The travel direction information discussed above may be generated by the server 3 in the first configuration example, or the server 3 or the position management server 4 in the second configuration example.

In the third configuration example, nodes for learning can be selected in accordance with the process illustrated in FIG. 4 or the process illustrated in FIG. 6. With the third configuration example, the position management server 4 is not required, since nodes for learning can be selected using position information managed by the 5GC, rather than position information managed by the position management server 4 which is an external server.

In the information processing system according to the embodiment, the processor 31 of the server 3 (information processing apparatus) acquires node-related information (mobile body information) including information that indicates the respective positions of a plurality of nodes 2 (vehicles 10 (mobile bodies)) that can be used for machine learning (federated learning). The processor 31 of the server 3 selects one or more vehicles 10 (nodes 2) to be used for federated learning based on the node-related information (mobile body information) including information that indicates the positions of the nodes 2.

The server 3 can select nodes 2 (vehicles 10) so as to avoid redundant local machine learning, or collection of redundant sample data, using position information. That is, it is possible to select suitable vehicles 10 (mobile bodies).

Further, it is possible to avoid redundant processing by avoiding selection of a plurality of nodes traveling in the same direction, by selecting nodes 2 (vehicles 10) using node-related information including position and travel direction information. It is also possible to narrow nodes 2 (vehicles 10) to suitable ones, by selecting nodes 2 based on the node-related information and the present time (time information).

Position information and travel direction information can be acquired by the server 3, or can be acquired by the position management server 4 or the position management server 5 in the 5GC, and provided to the server 3.

The order of processes in the flowcharts described herein is changeable unless any contradiction occurs.

The processing and means described in the present disclosure may be freely combined and used as long as technical inconsistency is not generated. A processing step which was described based on the assumption that one device executes that step may be shared by a plurality of devices. Further, a processing step which was described based on the assumption that difference devices execute that step may be executed by one device. In the computer system, a kind of hardware configuration (server configuration) that implements each function may be freely changed.

The present disclosure may also be implemented by supplying a computer program storing the functions described in the above embodiment to a computer, and one or more processors included in the computer reading and executing the program. This computer program may be provided to the computer by a non-transitory computer-readable storage medium that can be connected to the system bus of the computer, or may be provided to the computer via a network. The non-transitory computer-readable storage medium is an arbitrary type of disk, such as a magnetic disk (e.g. floppy^{®} disk, hard disk drive (HDD)) and an optical disk (e.g. CD-ROM, DVD disk, Blu-ray disk), a read only memory (ROM), a random access memory (RAM), an EPROM, an EEPROM, a magnetic card, a flash memory, an optical card, and an arbitrary type of medium suitable for storing electronic instructions.

## Claims

1. An information processing apparatus (3), comprising
a controller (31) configured to:
acquire mobile body information including information that indicates respective positions of a plurality of mobile bodies (10) that are usable for machine learning; and
select one or more mobile bodies (10) to be used for machine learning based on the mobile body information.

2. The information processing apparatus according to claim 1, wherein the controller (31) selects mobile bodies (10) to be used for machine learning based on the mobile body information further including information that indicates respective travel directions of the plurality of mobile bodies (10).

3. The information processing apparatus according to claim 1 or 2, wherein the controller (31) selects mobile bodies (10) to be used for machine learning based on the mobile body information and a present time.

4. The information processing apparatus according to any one of claims 1 to 3, wherein the controller (31) acquires the mobile body information received from a network (1, 1A).

5. The information processing apparatus according to any one of claims 1 to 3, wherein the controller (31) acquires the mobile body information from a cellular network (1A) .

6. The information processing apparatus according to any one of claims 1 to 3, wherein the controller (31) acquires the mobile body information from a 5GC.

7. The information processing apparatus according to claim 6, wherein the controller (31) acquires the mobile body information via an NEF from an NWDAF, an AMF, or an LMF in the 5GC.

8. The information processing apparatus according to any one of claims 1 to 7, wherein the controller (31) selects mobile bodies (10) to be used for federated learning.

9. An information processing method that causes an information processing apparatus (3) to execute:
acquiring mobile body information including information that indicates respective positions of a plurality of mobile bodies (10) that are usable for machine learning; and
selecting one or more mobile bodies (10) to be used for machine learning based on the mobile body information.

10. The information processing method according to claim 9, wherein the information processing apparatus (3) selects mobile bodies (10) to be used for machine learning based on the mobile body information further including information that indicates respective travel directions of the plurality of mobile bodies (10).

11. The information processing method according to claim 9 or 10, wherein the information processing apparatus (3) selects mobile bodies (10) to be used for machine learning based on the mobile body information and a present time.

12. The information processing method according to any one of claims 9 to 11, wherein the information processing apparatus (3) acquires the mobile body information received from a network.

13. The information processing method according to any one of claims 9 to 11, wherein the information processing apparatus (3) acquires the mobile body information received from a cellular network.

14. The information processing method according to any one of claims 9 to 11, wherein the information processing apparatus (3) acquires the mobile body information from a 5GC.

15. A program that causes a computer to execute:
acquiring mobile body information including information that indicates respective positions of a plurality of mobile bodies (10) that are usable for machine learning; and
selecting one or more mobile bodies (10) to be used for machine learning based on the mobile body information.
